Europäisches Patentamt

European Patent Office

Office européen des brevets

(11) Veröffentlichungsnummer: **0 312 718 B1**

(12) **EUROPÄISCHE PATENTSCHRIFT**

(45) Veröffentlichungstag der Patentschrift: **07.10.92**

(21) Anmeldenummer: **88112438.2**

(22) Anmeldetag: **01.08.88**

(51) Int. Cl.⁵: **B60T 15/24**, B60T 15/20

(54) **Zweikreisig ansteuerbares Bremsdruck-Steuerventil.**

(30) Priorität: **23.09.87 DE 3731979**

(43) Veröffentlichungstag der Anmeldung:
**26.04.89 Patentblatt 89/17**

(45) Bekanntmachung des Hinweises auf die
Patenterteilung:
**07.10.92 Patentblatt 92/41**

(84) Benannte Vertragsstaaten:
**DE FR GB IT SE**

(56) Entgegenhaltungen:
**DE-A- 1 963 879**
**DE-A- 3 229 836**
**DE-A- 3 515 386**
**US-A- 4 493 510**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Lichtenberg, Wolfgang, Dipl.-Ing.
Ossietzkyring 32
W-3000 Hannover 91(DE)**
Erfinder: **Schult, Manfred, Dr.-Ing.
Carl-Zuckmayer-Strasse 4
W-3008 Garbsen 8(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung betrifft ein zweikreisig ansteuerbares Bremsdruck-Steuerventil für druckmittelbetätigte Fahrzeugbremsanlagen, insbesondere Anhänger-Steuerventil, gemäß dem Oberbegriff der Patentansprüche 1, 2 und 3.

Anhänger-Steuerventile dienen zur Steuerung des Druckes einer Anhänger-Bremsanlage in Abhängigkeit vom Druck in der Bremsanlage des Motorfahrzeuges.

Die Drucksteuerung erfolgt in der Weise, daß das durch Betätigung des Motorwagen-Bremsventils in eine erste Steuerkammer des Anhänger-Steuerventils einströmende Druckmittel, z.B. Druckluft, einen mit einem kombinierten Einlaß- und Auslaßventil in Wirkverbindung stehenden Steuerkolben bewegt, wodurch zunächst ein Schließen des mit einem Entlüftungsanschluß in Verbindung stehenden Auslaßventils bewirkt wird. Bei der weiteren Bewegung des Steuerkolbens wird das zwischen einer Einlaßkammer und einer Arbeitskammer angeordnete Einlaßventil in die Offenstellung gebracht. Die von einem Druckluft-Vorratsbehälter gelieferte, in der Einlaßkammer anstehende Druckluft gelangt durch die Arbeitskammer sowie eine zu einem Anhänger-Bremsventil der Anhänger-Bremsanlage führende Druckmittelleitung in die Steuerkammer des Anhänger-Bremsventils. Wenn der vom Anhänger-Steuerventil ausgesteuerte Druck eine vom Steuerdruck und von den Wirkflächen des Steuerkolbens abhängige Höhe erreicht hat, wird der Steuerkolben vom Druck in der Arbeitskammer gegen den Steuerdruck bewegt und das Einlaßventil geschlossen. Das Anhänger-Steuerventil befindet sich in der Abschlußstellung.

Wird der Steuerdruck weggenommen, so überwiegt der auf den Steuerkolben einwirkende ausgesteuerte Druck und verschiebt den Steuerkolben, so daß das Auslaßventil öffnet und der Druck in der zum Anhänger-Bremsventil führenden Druckmittelleitung sowie der Druck in der Steuerkammer des nachgeschalteten Anhänger-Bremsventils über den Entlüftungsanschluß des Anhänger-Steuerventils abgebaut wird.

Um sicherzustellen, daß bei Ausfall eines Steuerkreises die Funktionsfähigkeit des Anhänger-Steuerventils erhalten bleibt, ist im Anhänger-Steuerventil ein zweiter Steuerkolben zur Betätigung des kombinierten Einlaß- und Auslaßventils vorgesehen, der eine von der ersten Steuerkammer getrennt angeordnete zweite Steuerkammer begrenzt, welche mit einem zweiten Bremskreis des Motorfahrzeugs verbunden ist. Zweckmäßigerweise sind der erste Steuerkolben und der zweite Steuerkolben so bemessen und derart im Anhänger-Steuerventil angeordnet, daß die Charakteristik des vom Anhänger-Steuerventil auszusteuernden Bremsdruckes auch bei Ausfall eines Bremskreises erhalten bleibt.

Ein derartiges Anhänger-Steuerventil ist aus der Druckschrift "WABCO Beschreibung der Druckluftgeräte in Fahrzeugen, Ausgabe Juli 1982, Gerät Nummer 973 002" bekannt.

Bei einem solchen Bremsdruck-Steuerventil ist es erforderlich, mit gleichem Druckniveau im ersten Bremskreis und im zweiten Bremskreis zu arbeiten, um zu verhindern, daß der den zweiten Steuerkolben beaufschlagende Steuerdruck aus dem zweiten Bremskreis bei intaktem ersten Bremskreis die Bremsdrucksteuerung beeinflußt.

Der Erfindung liegt die Aufgabe zugrunde, ein Bremsdruck-Steuerventil der eingangs erwähnten Art zu schaffen, bei welchem es mit einfachen Mitteln möglich ist, den ersten Steuerkolben mit einem Steuerdruck zu beaufschlagen, dessen Höhe geringer ist als die Höhe des den zweiten Steuerkolben beaufschlagenden Druckes in der zweiten Steuerkammer, ohne daß bei Drucksteuerung über den ersten Steuerkolben eine Beeinflussung der Drucksteuerung durch den zweiten Steuerkolben erfolgt.

Diese Aufgabe wird mit den in den Patentansprüchen 1, 2 und 3 angegebenen Ausführungen der Erfindung gelöst. Weiterbildungen und vorteilhafte Ausgestaltungen der Erfindung sind in den Unteransprüchen angegeben.

Die Erfindung bietet insbesondere den Vorteil, ein Bremsdruck-Steuerventil zu erhalten, welches es erlaubt, bei zwei intakten Bremskreisen den Bremskreis, aus welchem die erste Steuerkammer mit Druckmittel versorgt wird, mit einem Druck zu betreiben, dessen Höhe variabel ist und den zweiten Bremskreis mit einem Druck zu betreiben, der bei Ausfall des ersten Bremskreises die Drucksteuerung ohne Druckverluste sicherstellt.

Ein mit dem eingangs erwähnten Bremsdruck-Steuerventil vergleichbares Bremsdruck-Steuerventil wird in der DE-A-35 15 386 beschrieben. Dieses Anhänger-Steuerventil weist ebenfalls einen ersten Steuerkolben und einen zweiten Steuerkolben auf. Der erste Steuerkolben wird mit dem Druckmittel aus einem ersten Bremskreis und der zweite Steuerkolben wird mit dem Druckmittel aus einem zweiten Bremskreis beaufschlagt. Die beiden Steuerkolben sind relativ zueinander bewegbar angeordnet und weisen gleich große Wirkflächen auf.

Auch bei diesem bekannten Bremsdruck-Steuerventil ist es erforderlich, mit gleichem Druckniveau im ersten Bremskreis und im zweiten Bremskreis zu arbeiten, um zu verhindern, daß der den zweiten Steuerkolben beaufschlagende Steuerdruck aus dem zweiten Bremskreis bei intaktem ersten Bremskreis die Bremsdrucksteuerung beeinflußt.

Desgleichen zeigt die DE-A-1 963 879 eine Bremsventileinrichtung mit zwei Steuerkolben, wobei jeder dieser beiden Steuerkolben von dem Druckmittel aus einem separaten Bremskreis beaufschlagbar ist.

Sind beide Bremskreise intakt, so wird immer der Steuerkolben das Ventil schalten, der mit dem höheren Druck beaufschlagt wird.

Es ist somit auch bei dieser Bremsventileinrichtung erforderlich, mit gleichem Druckniveau im ersten Bremskreis und im zweiten Bremskreis zu arbeiten.

Anhand der Zeichnung werden nachstehend zwei Ausführungsbeispiele der Erfindung näher erläutert.

Es zeigen:

Fig.1 ein als Anhänger-Steuerventil dienendes Bremsdruck-Steuerventil mit einem ersten Steuerkolben und einem zweiten Steuerkolben, wobei die einander entgegengerichteten Wirkflächen des zweiten Steuerkolbens unterschiedlich groß ausgebildet sind und

Fig. 2 ein als Anhänger-Steuerventil dienendes Bremsdruck-Steuerventil mit einem ersten Steuerkolben, einem zweiten Steuerkolben und einem mit dem zweiten Steuerkolben in Wirkverbindung bringbaren Zusatzkolben, welcher vom Druckmittel aus der vom ersten Steuerkolben begrenzten Steuerkammer beaufschlagt wird.

Der besseren Übersicht halber sind in den Ausführungsbeispielen nur die Bauteile des Bremsdruck-Steuerventils näher beschrieben, die zum Verständnis der Erfindung erforderlich sind.

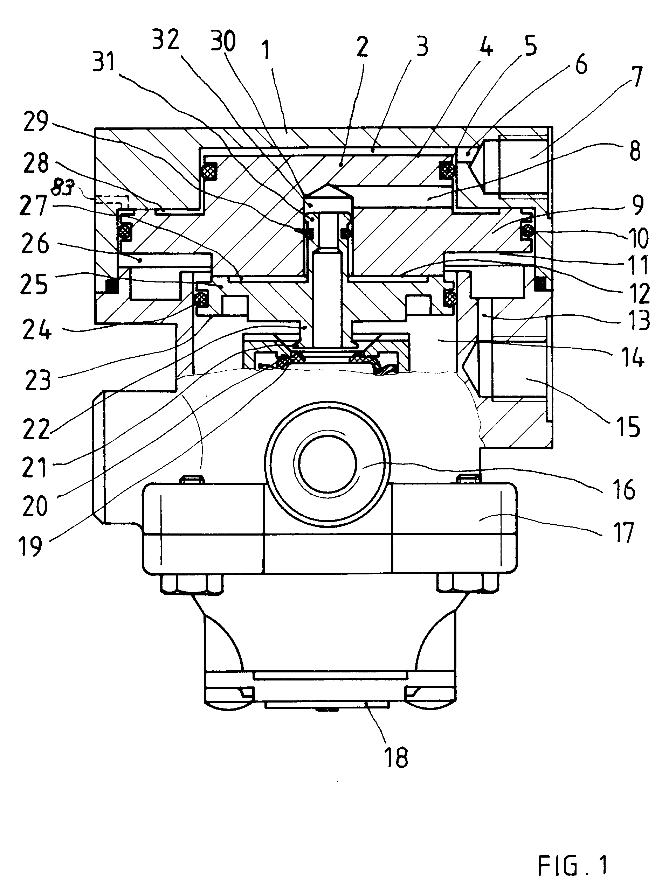

In Fig. 1 ist ein als Zweileitungs-Anhänger-Steuerventil dienendes Bremsdruck-Steuerventil dargestellt, welches aus einem Gehäuseoberteil (1) und einem Gehäuseunterteil (17), an dessen Unterseite eine Entlüftung (18) angeordnet ist, besteht.

Im Gehäuseoberteil (1) ist ein erster Steuerkolben (25) angeordnet, der einen in einer Umfangsnut gelagerten Dichtring (24) trägt. Der erste Steuerkolben (25) begrenzt mit einer ersten Wirkfläche (27) eine erste Steuerkammer (26), welche über einen Kanal (13) und einen an diesen anschließenden ersten Steueranschluß (15), z.B. mit einem ersten Bremskreis eines Motorfahrzeugs verbunden ist.

Ein relativ zum ersten Steuerkolben (25) verschiebbarer zweiter Steuerkolben (9, 2) ist benachbart zum ersten Steuerkolben (25) im Gehäuseoberteil (1) angeordnet. Der zweite Steuerkolben (9, 2) weist eine der ersten Steuerkammer (27) zugewandte erste Wirkfläche (11, 12) und eine der ersten Wirkfläche (11, 12) entgegengerichtete zweite Wirkfläche (4) auf. Mit seiner zweiten Wirkfläche (4) begrenzt der zweite Steuerkolben (9, 2) eine zweite Steuerkammer (3), die über einen Kanal (6) und einen an diesem anschließenden zweiten Steueranschluß (7) mit einem zweiten Bremskreis des Motorfahrzeugs verbunden ist.

Der erste Steuerkolben (25) weist auf seiner dem zweiten Steuerkolben (9, 2) zugewandten Seite einen zentrisch angeordneten, zapfenartigen Fortsatz (31) auf, der sich in eine im zweiten Steuerkolben (9, 2) vorgesehene, als Sackbohrung ausgebildete Ausnehmung (30) hineinerstreckt. Der Fortsatz (31) und die Ausnehmung (30) dienen als Führung für den ersten Steuerkolben (25). Ein in einer Umfangsnut des Fortsatzes (31) gelagerter Dichtring (29) liegt dichtend an der die Ausnehmung (30) zur Aufnahme des Fortsatzes (31) begrenzenden Wandung an und verhindert so eine Verbindung zwischen der ersten Steuerkammer (26) und einem Druckausgleichsraum (32), der vom Boden der Ausnehmung (30) und der Stirnfläche des Fortsatzes (31) begrenzt wird. Der Druckausgleichsraum (32) ist über einen im zweiten Steuerkolben (9, 2) angeordneten Kanal (8) und einen im Gehäuse vorgesehenen weiteren Kanal mit der Atmosphäre verbunden.

Der zweite Steuerkolben (9, 2) weist, wie bereits erwähnt, eine dem ersten Steuerkolben (25) zugewandte, die erste Steuerkammer (26) begrenzende erste WirkFläche (11, 12) und eine dem ersten Steuerkolben (25) abgewandte, die zweite Steuerkammer (3) begrenzende zweite Wirkfläche (4) auf.

Die dem ersten Steuerkolben (25) zugewandte erste Wirkfläche (11, 12) des zweiten Steuerkolbens (9, 2) ist größer ausgebildet als die dem ersten Steuerkolben (25) abgwandte, die zweite Steuerkammer (3) begrenzende zweite Wirkfläche (4) des zweiten Steuerkolbens (9, 2). Die unterschiedliche Größe der beiden einander entgegengerichteten Wirkflächen (11, 12 und 4) am zweiten Steuerkolben (9, 2) werden dadurch erreicht, daß der zweite Steuerkolben (9, 2) abgestuft ausgebildet und in einer entsprechend abgestuft ausgebildeten Gehäuseausnehmung geführt ist.

In einer Umfangsnut des den kleineren Durchmesser aufweisenden Teiles (2) des zweiten Steuerkolbens (9, 2) ist ein Dichtring (5) gelagert, der die zweite Steuerkammer (4) gegen einen durch die am zweiten Steuerkolben (9, 2) vorgesehene Abstufung gebildeten Ringraum (28) abdichtet. Ein weiterer Dichtring (10), der in einer Umfangsnut des den größeren Durchmesser aufweisenden Teiles (9) des zweiten Steuerkolbens (9, 2) gelagert ist, dichtet die erste Steuerkammer (26) gegen denselben Ringraum (28) ab. Der als Druckausgleichsraum dienende Ringraum (28) ist mit dem im zweiten Steuerkolben (9, 2) vorgesehenen, zur Atmosphäre hin führenden Kanal (8) verbunden.

Die der ersten Steuerkammer (26) zugewandte erste Wirkfläche (27) des ersten Steuerkolbens (25) weist vorzugsweise die gleiche Größe auf wie die die zweite Steuerkammer (3) begrenzende zweite Wirkfläche (4) des zweiten Steuerkolbens (9, 2).

Der erste Steuerkolben (25) besitzt eine der ersten Steuerkammer (26) abgewandte zweite Wirkfläche (23), die der ersten Wirkfläche (27) entgegengerichtet ist und eine Arbeitskammer (14) begrenzt. Die Arbeitskammer (14) ist über einen Druckmittelausgang (16), z.B. mit einer zu einem Anhänger-Bremsventil führenden Druckmittelleitung verbunden.

Auf der der ersten Steuerkammer (26) abgewandten Seite des ersten Steuerkolbens (25) ist zentrisch ein Ventilstößel (22) angeordnet, der sich in die Arbeitskammer (14) hineinerstreckt und an seinem freien Ende als Auslaßventilsitz (21) für ein kombiniertes Einlaß-und Auslaßventil ausgebildet ist. Das kombinierte Einlaß- und Auslaßventil setzt sich aus einem im Gehäuse (1, 17) angeordneten Einlaßventilsitz (20), einem Ventilkörper (19) und dem genannten Auslaßventilsitz (21) zusammen. Der Ventilkörper (19) wird von einer Feder in Richtung auf den Einlaßventilsitz (20) zu beaufschlagt.

Über das kombinierte Einlaß- und Auslaßventil (19, 20, 21) ist die Arbeitskammer (14) in Abhängigkeit von der Stellung des ersten Steuerkolbens (25) oder/und des zweiten Steuerkolbens (9, 2) mit einer hier nicht dargestellten Einlaßkammer oder mit der zur Atmosphäre hin führenden Entlüftung (18) verbindbar. Die Einlaßkammer ist mit einer Vorrats-Druckmittelquelle verbunden.

Die Funktion des im vorstehenden beschriebenen Bremsdruck- Steuerventils wird nachstehend näher erläutert.

In der gezeigten Stellung sind die erste Steuerkammer (26) und die zweite Steuerkammer (3) drucklos und in der Einlaßkammer steht Vorratsdruck an.

Wird das Motorwagen-Bremsventil vom Fahrer betätigt, so strömt Bremsdruckmittel von einem ersten Betriebsbremskreis über den ersten Steueranschluß (15) in die erste Steuerkammer (26). Gleichzeitig wird vom zweiten Bremskreis des Motorfahrzeugs über den zweiten Steueranschluß (7) Bremsdruckmittel in die zweite Steuerkammer (3) eingesteuert.

Es wird angenommen, daß der Bremsdruck im ersten Betriebsbremskreis durch ein im ersten Betriebsbremskreis angeordnetes Gerät in der Weise beeinflußt wird, daß die Höhe des Druckes im ersten Betriebsbremskreis niedriger ist als die Höhe des Druckes im zweiten Bremskreis. Das bedeutet, daß der erste Steuerdruck in der ersten Steuerkammer (26) niedriger ist als der zweite Steuerdruck in der zweiten Steuerkammer (3).

Da jedoch die der zweiten Steuerkammer (3) abgewandte erste Wirkfläche (11, 12) des zweiten Steuerkolbens (9, 2) um den Betrag der Ringfläche (11) am zweiten Steuerkolben (11, 12) größer ist als die der ersten Wirkfläche (11, 12) entgegengerichtete, die zweite Steuerkammer (3) begrenzende zweite Wirkfläche (4) des zweiten Steuerkolbens (9, 2), verändert sich die Lage des zweiten Steuerkolbens (9, 2) nicht, d.h. der zweite Steuerkolben (9, 2) verbleibt in seiner ursprünglichen Lage.

Der sich in der ersten Steuerkammer (26) aufbauende Druck bewegt den ersten Steuerkolben (25) abwärts in Richtung auf die Arbeitskammer (14) zu. Dabei setzt der Auslaßventilsitz (21) des kombinierten Einlaß- und Auslaßventils (19, 20, 21) auf den Ventilkörper (19) auf. Das Auslaßventil (21, 19) ist jetzt geschlossen und die Verbindung von der Arbeitskammer (14) zur Atmosphäre ist unterbrochen. Bei der weiteren Abwärtsbewegung des ersten Steuerkolbens (25) wird der Ventilkörper (19) vom Einlaßventilsitz (20) abgehoben und so das Einlaßventil (19, 20) des kombinierten Einlaß- und Auslaßventils (19, 20, 21) in die Offenstellung gebracht. Von der Druckmitteleinlaßkammer strömt Vorratsdruckluft durch das geöffnete Einlaßventil (19, 20) in die Arbeitskammer (14) und weiter durch den Druckmittelausgang (16) zur Steuerkammer des Anhänger-Bremsventils des Anhänger-Fahrzeugs.

Fällt durch einen Defekt der erste Betriebsbremskreis aus, so erfolgt über den zweiten Betriebsbremskreis nur eine Belüftung des zweiten Steueranschlusses (7). Der dabei in der zweiten Steuerkammer (3) sich aufbauende Druck bewegt den zweiten Steuerkolben (9, 2) nach unten in Richtung auf die erste Steuerkammer (26) zu. Dabei kommt der zweite Steuerkolben (9, 2) mit seiner ersten Wirkfläche (11, 12) an der ersten Wirkfläche (27) des ersten Steuerkolbens (25) zur Anlage und verschiebt den ersten Steuerkolben (25) in Richtung auf die Arbeitskammer (14) zu. Dabei schließt der zweite Steuerkolben (9, 2) indirekt über den ersten Steuerkolben (25) das Auslaßventil (19, 21) und öffnet das Einlaßventil (19, 20), so daß die der Motorwagenbremsung entsprechende Belüftung der Anhänger-Bremsleitung stattfindet.

Fällt der zweite Betriebsbremskreis aus, so wird über den ersten Betriebsbremskreis ausschließlich die erste Steuerkammer (26) belüftet. Die zweite Steuerkammer (3) ist drucklos und der zweite Steuerkolben (9, 2) verbleibt in seiner Ausgangsstellung. Der sich in der ersten Steuerkammer (26) aufbauende Druck verschiebt den ersten Steuerkolben (25) in Richtung auf die Arbeitskammer (14) zu. Das Auslaßventil (19, 21) gelangt in die Schließstellung und das Einlaßventil (19, 20) gelangt in die Offenstellung.

Die Entlüftung des Verbrauchers, wie z.B. der Anhängerbremsleitung, erfolgt in der Weise, daß der Druck in der ersten Steuerkammer (26) und in der zweiten Steuerkammer (3) über das Motorwagen-Bremsventil abgebaut wird. Mittels des Druckes in der Arbeitskammer (14) oder auch mittels Federkraft wird der erste Steuerkolben (25) oder auch der erste Steuerkolben 25) und der zweite Steuerkolben (9, 2) nach oben in Richtung von der Arbeitskammer (14) weg bewegt. Dabei gelangt das Einlaßventil (19, 20) in die Schließstellung und das Auslaßventil (19, 21) gelangt in die Offenstellung. Die Anhänger-Bremsleitung wird über den Druckmittelausgang (16), die Arbeitskammer (14) und das geöffnete Auslaßventil (19, 21) sowie die Entlüftung (18) zur Atmosphäre hin entlüftet. Die indirekte Beaufschlagung des zweiten Steuerkolbens (2, 9) mit dem Druck aus der Arbeitskammer (14) entgegen dem zweiten Steuerdruck erfolgt dadurch, daß der erste Steuerkolben (25) und der zweite Steuerkolben (2, 9) in Reihe hintereinanderliegend angeordnet sind und der erste Steuerkolben (25) vom Druck in der Arbeitskammer (14) am zweiten Steuerkolben (2, 9) zur Anlage bringbar ist.

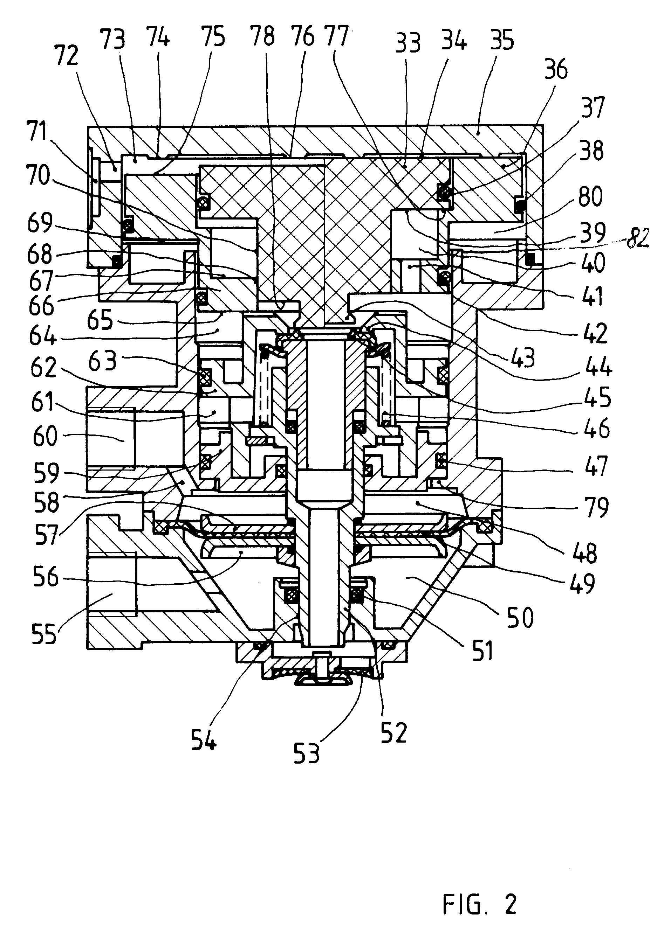

Gemäß Fig. 2 ist in einem Ventilgehäuse (35) ein erster Steuerkolben (33, 70) angeordnet, welcher mit einer ersten Wirkfläche (34) eine erste Steuerkammer (73) von einer Arbeitskammer (64, 40) trennt. Die erste Steuerkammer (73) ist über einen ersten Steueranschluß (71) und einen an diesen anschließenden Kanal (72) z.B. mit einem ersten Bremskreis eines Motorfahrzeugs verbunden. Über einen Druckmittelausgang steht die Arbeitskammer (64, 40) mit einer beispielsweise zu einem Anhängerbremsventil eines Anhängerfahrzeuges führenden Anhänger-Bremsleitung in Verbindung. Der erste Steuerkolben (33, 70) weist einen in Umfangsrichtung verlaufenden Dichtring (37) auf, welcher verhindert, daß Druckmittel von der ersten Steuerkammer (73) in die Arbeitskammer (64, 40) gelangt.

Unterhalb des ersten Steuerkolbens (33, 70) ist ein relativ zum ersten Steuerkolben (33, 70) bewegbarer aus einem ersten Steuerkolbenteil (62) und einem zweiten Steuerkolbenteil (49) bestehender zweiter Steuerkolben (62, 49) angeordnet, wobei die beiden Steuerkolbenteile (62 und 49) hintereinander geschaltet und fest miteinander verbunden sind. Der zweite Steuerkolben (49, 62) weist eine erste Wirkfläche (56) und eine zweite Wirkfläche, die der ersten Wirkfläche (56) entgegengerichtet ist, auf. Er begrenzt mit seiner ersten Wirkfläche (56) eine zweite Steuerkammer (50) und mit seiner zweiten Wirkfläche die Arbeitskammer (64, 40). Ein auf der Umfangsfläche des ersten Steuerkolbenteiles (62) angeordneter Dichtring (63) dichtet die Arbeitskammer (64, 40) gegen eine gegenüberliegende, auf der anderen Seite des ersten Steuerkolbensteiles (62) angeordnete Druckmitteleinlaßkammer (61) ab.

Im ersten Steuerkolbenteil (62) ist zentrisch eine Ausnehmung angeordnet, die im oberen Kolbenteil (62) des ersten Steuerkolbenteiles (62) als Ventilsitz (44) ausgebildet ist. Im unteren Kolbenteil des ersten Steuerkolbenteiles (62) ist in der Ausnehmung ein abgestuftes Kolbenrohr (52) befestigt. Das freie Ende des Kolbenrohres (52) wird in einer Ausnehmung (54) des Ventilgehäusebodens mittels eines Dichtringes (51) abgedichtet geführt.

Im Kolbenrohr (52) ist ein mit einem Dichtring versehener, als Ventilglied ausgebildeter zylindrischer Hohlkörper befestigt, der auf seiner dem Ventilsitz (44) zugewandten Seite ein Dichtelement (45) trägt. Das mit dem Dichtelement (45) versehene Ventilglied bildet mit dem Ventilsitz (44) ein Einlaßventil (44, 45), über welches die Druckmitteleinlaßkammer (61) mit der Arbeitskammer (64, 40) verbindbar ist. Eine sich an einem Anschlag des Kolbenrohres (52) abstützende Druckfeder (46) beaufschlagt einen am Ventilglied angeordneten Federteller und hält so das mit dem Dichtelement (45) versehene Ventilglied auf dem Ventilsitz (44) des Einlaßventils (44, 45). An der der Arbeitskammer (64, 40) zugewandten Seite des ersten Steuerkolbens (33, 70) ist koaxial zu dem Ventilglied ein Stößel angeordnet, welcher an seinem dem Ventilglied zugewandten Ende als Ventilkörper (43) ausgebildet ist. Der mit dem Ventilkörper (43) versehene Stößel bildet mit dem das Dichtelement (45) tragenden Ventilglied ein Auslaßventil (43, 45), über welches die Arbeitskammer (64, 40) mit der Atmosphäre verbindbar ist.

Das Einlaßventil (44, 45) und das Auslaßventil (43, 45) bilden zusammen ein kombiniertes Einlaß- und Auslaßventil, welches vom ersten Steuerkolben (33, 70) und vom zweiten Steuerkolben (49, 62) betätigbar ist.

Das freie Ende des Kolbenrohres (52) ragt in eine Entlüftungskammer, welche von einem zur Atmosphäre hin in die Offenstellung bringbaren Rückschlagventil (53) verschlossen wird. Zwischen den beiden Steuerkolbenteilen (62 und 49) ist eine Wand (59) mittels eines Dichtringes (47) gegen die Gehäusewand und mittels eines weiteren Dichtringes gegen das Kolbenrohr (52) auf dem Kolbenrohr (52) relativ zu den beiden Steuerkolbenteilen (62, 49) verschiebbar angeordnet.

Das zweite Steuerkolbenteil (49) trennt die zweite Steuerkammer (50) von einer dritten Steuerkammer (48). Die zweite Steuerkammer (50) wird von der der Wand (59) abgewandten Seite (56) (erste Wirkfläche des zweiten Steuerkolbens (49, 62) des zweiten Steuerkolbenteiles (49) begrenzt und die dritte Steuerkammer (48) wird von der der Wand (59) zugewandten Seite (57) (Wirkfläche) des zweiten Steuerkolbenteiles (49) begrenzt. Das zweite Steuerkolbenteil (49) ist als Membrankolben ausgebildet, der mit seinem äußeren Randbereich in der Gehäusewandung befestigt und mit seinem verstärkten Mittelteil mit dem Kolbenrohr (52) verbunden ist.

Die Druckmitteleinlaßkammer (61) verbindet einerseits den ersten Vorratsanschluß mit einem zweiten Vorratsanschluß und ist andererseits über im ersten Steuerkolbenteil (62) vorgesehene Ausnehmungen mit einem das kombinierte Einlaß- und Auslaßventil aufnehmenden Raum des ersten Steuerkolbenteils (62) verbunden. Der erste Vorratsanschluß ist z. B. an eine Vorratsleitung des Zugfahrzeuges und der zweite Vorratsanschluß ist z.B. an die Anhänger-Vorratsleitung anschließbar. Über einen zweiten Steueranschluß (55) ist die zweite Steuerkammer (50) mit einem zweiten Bremskreis des Motorfahrzeuges verbunden. Die dritte Steuerkammer (48) ist über einen dritten Steueranschluß (60) sowie einen Kanal (58) beispielsweise an ein als Handbremsventil ausgebildetes entlüftendes Steuerventil oder eine Vorratsleitung des Zugfahrzeugs anschließbar.

Ein im Bereich der dritten Steuerkammer (48) in der Gehäusewandung angeordneter Anschlag (79) begrenzt den Hub der als Kolben dienenden Wand (59) in Richtung auf die dritte Steuerkammer (48) zu. Ein weiterer Anschlag, der im Bereich des ersten Vorratsanschlusses und des zweiten Vorratsanschlusses zwischen dem ersten Steuerkolbenteil (62) und der Wand (59) vorgesehen ist, verhindert, daß bei einem Hub der Wand (59) in Richtung auf die Druckmitteleinlaßkammer (61) zu die Wand (59) oder ein mit der Wand (59) zusammenwirkendes Teil den Durchlaßquerschnitt der Vorratsanschlüsse verändert.

Es ist ein topfförmig und abgestuft ausgebildeter Zusatzkolben (36, 66) vorgesehen, der mit einer Wirkfläche (75) die erste Steuerkammer (73) und mit einer der Wirkfläche (75) entgegengerichteten Ringfläche (65) die Arbeitskammer (64, 40) begrenzt. Die Wirkfläche (75) des Zusatzkolbens ist vom ersten Steuerdruck aus der ersten Steuerkammer (73) in Richtung auf den zweiten Steuerkolben (49, 62) zu beaufschlagbar und bewegbar. Der Zusatzkolben (36, 66) und der erste Steuerkolben (33, 70), welcher ebenfalls abgestuft ausgebildet ist, sind teleskopartig ineinander und relativ zueinander verschiebbar angeordnet, wobei der erste Steuerkolben (33, 70) im Zusatzkolben (36, 66) geführt wird. Der abgestufte Teil (70) des ersten Steuerkolbens (33, 70) ist durch eine Öffnung (68) im Boden des Zusatzkolbens (36, 66) aus diesem herausgeführt und erstreckt sich in die Arbeitskammer (64, 40) hinein.

Der auf dem Umfang des den größeren Durchmesser aufweisenden Teiles (33) des ersten Steuerkolbens (33, 70) angeordnete Dichtring (37) liegt dichtend an der Innenwand des Zusatzkolbens (36, 66) an. In der äußeren Mantelfläche des den größeren Durchmesser aufweisenden Teiles (36) des Zusatzkolbens (36, 66) ist ein Dichtring (38) gelagert, der dichtend an der Gehäusewand anliegt.

Durch die teleskopartige Anordnung des ersten Steuerkolbens (33, 70) und des Zusatzkolbens (36, 66) zueinander sind die einander entgegengerichteten Flächen (75 und 65) des Zusatzkolbens (36, 66) als Ringflächen ausgebildet, wobei die als erste Wirkfläche (75) dienende erste Ringfläche die erste Steuerkammer (73) und die der ersten Wirkfläche (75) entgegengerichtete, zweite Ringfläche die Arbeitskammer (64, 40) begrenzt.

Die der ersten Wirkfläche (34) des ersten Steuerkolbens (33, 70) entgegengerichtete, die Arbeitskammer (64, 40) begrenzende zweite Wirkfläche (39, 78) des ersten Steuerkolbens (33, 70) setzt sich aus zwei Teilflächen (39 und 78) zusammen, wobei die eine Teilfläche (78) an dem den kleineren Durchmesser aufweisenden Teil (70) und die andere Teilfläche (39) an dem den größeren Durchmesser aufweisenden Teil (33) des ersten Steuerkolbens (33, 70) vorgesehen ist.

Die Arbeitskammer (64, 40) setzt sich aus zwei Teilkammern (64 und 40) zusammen, wobei die eine Teilkammer (64) von der zweiten Fläche (65) des Zusatzkolbens (36, 66) und der Teilfläche (78) der zweiten Wirkfläche (39, 78) des ersten Steuerkolbens (33, 70) und die andere Teilkammer (40) von der Ringfläche (39) am ersten Steuerkolben (33, 70), welche dem Boden des topfförmigen Zusatzkolbens (36, 66) zugewandt ist und einer Ringfläche (67, 77)des Zusatzkolbens, die der Ringfläche (39) des ersten Steuerkolbens (33, 70) entgegengerichtet ist, begrenzt wird. Die beiden Teilkammern (64 und 40) der Arbeitskammer (64, 40) sind über einen im Zusatzkolben (36, 66) angeordneten Kanal (41) miteinander verbunden.

Um zu verhindern, daß vom Druckmittel in der Arbeitskammer (64, 40) auf den Zusatzkolben (36, 66) eine Bewegung desselben verursachende Kräfte ausgeübt werden, sind die beiden einander entgegengerichteten Ringflächen (65 und 67, 77) am Zusatzkolben gleichgroß ausgebildet.

Eine äußere Ringfläche (69) am Zusatzkolben (36, 66), die auf der der ersten Steuerkammer (73) abgewandten Seite des Zusatzkolbens (36, 66) gelegen ist, begrenzt zusammen mit einem Gehäusevorsprung (82), der auch als Anschlag für den Zusatzkolben (36, 66) ausgebildet sein kann, einen als Druckausgleichskammer dienenden Raum (80).

Auf dem Umfang des den kleineren Durchmesser aufweisenden Teiles (66) des Zusatzkolbens (36, 66) ist ein Dichtring (42) angeordnet, der die Arbeitskammer (64, 40) gegen den Raum (80) abdichtet. Der auf dem Umfang des den größeren Durchmesser aufweisenden Teiles (36) des Zusatzkolbens (36, 66) angeordnete Dichtring (38) dichtet die erste Steuerkammer (73) ebenfalls gegen den Raum (80) ab.

Der auf dem Umfang des den größeren Durchmesser aufweisenden Teiles (33) des ersten Steuerkolbens (33, 70) angeordnete Dichtring (37) dichtet die erste Steuerkammer (73) gegen die Arbeitskammer (64, 40) ab. An der dem Gehäuseinnenraum zugewandten Seite des Gehäusedeckels sind Vorsprünge (74, 76) vorgesehen, die als Anschläge für den ersten Steuerkolben (33, 70) und den als Ringkolben ausgebildeten Zusatzkolben (36, 66) dienen.

Die Funktions des im vorstehenden beschriebenen, als Anhänger-Steuerventil dienenden Bremsdruck-Steuerventils wird nachfolgend näher erläutert.

Bei Betätigung des Motorwagen-Bremsventils strömt Druckmittel vom ersten Bremskreis über den ersten Steueranschluß (71) sowie den Kanal (72) in die erste Steuerkammer (73). Der sich in der ersten Steuerkammer (73) aufbauende erste Steuerdruck verschiebt den ersten Steuerkolben (33, 70) in Richtung auf die Arbeitskammer (64, 40) zu. Dabei setzt der mit dem Stößel verbundene Ventilkörper (43) auf dem Dichtelement (45) auf. Das Auslaßventil (43, 45) ist jetzt geschlossen und das Einlaßventil (45, 44) gelangt bei der weiteren Abwärtsbewegung des ersten Steuerkolbens (33, 70) in die Offenstellung.

Gleichzeitig mit diesen Vorgängen ist der Zusatzkolben (36, 66) vom ersten Steuerdruck in der ersten Steuerkammer (73) in gleicher Richtung wie der erste Steuerkolben (33, 70), d.h. in Richtung auf die Arbeitskammer (64, 40) zu, verschoben worden und gelangt dabei mit seiner der Teilkammer (64) der Arbeitskammer (64, 40) zugewandten Fläche (65) am Teil (62) des zweiten Steuerkolbens (62, 49), dessen Wirkfläche die Arbeitskammer (64, 40) begrenzt, zur Anlage. Das in der Druckmitteleinlaßkammer (61) anstehende Druckmittel gelangt durch das geöffnete Einlaßventil (44, 45) des kombinierten Einlaß- und Auslaßventils (44, 45, 43) in die Teilkammer (64) und weiter über den im Zusatzkolben (36, 66) vorgesehenen Kanal (41) in die Teilkammer (40) der Arbeitskammer (64, 40) sowie durch den nicht dargestellten Druckmittelausgang und die Anhänger-Bremsleitung zum hier nicht gezeigten Anhänger-Bremsventil.

Über den dritten Steueranschluß (60) ist die dritte Steuerkammer (48) mit dem Handbremsventil des Motorfahrzeugs verbunden. Die Kraft des Druckes in der dritten Steuerkammer (48) überwiegt aufgrund der unterschiedlichen Wirkflächen des ersten Steuerkolbensteiles (62) und des zweiten Steuerkolbensteiles (49) des zweiten Steuerkolbens (62, 49) in Richtung auf die zweite Steuerkammer (50) zu und hält so das zweite Steuerkolbenteil (62) und die Wand (59) auf dem Anschlag (79). Der sich in der Arbeitskammer (64, 40) aufbauende Druck beaufschlagt die der ersten Steuerkammer (73) abgewandte Wirkfläche (78, 39) des ersten Steuerkolbens (33, 70) und bewegt diesen gegen die vom Druck in der ersten Steuerkammer (73) auf den ersten Steuerkolben (39, 70) einwirkende entgegengerichtete Kraft in Richtung auf die erste Steuerkammer (73) zu.

Das Einlaßventil (44, 45) gelangt in die Schließstellung und eine Abschlußstellung ist erreicht.

Gleichzeitig mit den im vorstehenden beschriebenen Vorgängen erfolgt vom zweiten Bremskreis über den zweiten Steueranschluß (55) eine Druckbeaufschlagung der zweiten Steuerkammer (50) mit einem zweiten Steuerdruck und somit eine Druckbeaufschlagung der ersten Wirkfläche (56) des zweiten Steuerkolbenteiles (49) des zweiten Steuerkolbens (62, 49) mit dem zweiten Steuerdruck in Richtung auf die dritte Steuerkammer (48) und die Arbeitskammer (64,40) zu. Da sich jedoch in der Arbeitskammer (64, 40) ein das erste Steuerkolbenteil (62) des zweiten Steuerkolbens (62, 49) beaufschlagender Druck aufbaut, dessen Kraft der entgegengerichtet auf den zweiten Steuerkolben (62, 49) einwirkenden Kraft des Druckes aus der zweiten Steuerkammer (50) entgegenwirkt, verändert sich die Lage des zweiten Steuerkolbens (62, 49) nicht.

Wird in die erste Steuerkammer (73) ein erster Steuerdruck aus dem ersten Bremskreis eingesteuert, dessen Höhe niedriger ist als die Höhe des in die zweite Steuerkammer (50) aus dem zweiten Bremskreis eingesteuerten zweiten Steuerdruckes, so verändert sich bei intaktem ersten Bremskkreis und bei intaktem zweiten Bremskreis die Lage des zweiten Steuerkolbens (62, 49) ebenfalls nicht, da die die erste Steuerkammer (73) begrenzende erste Wirkfläche (75) des Zusatzkolbens (36, 66) größer ist als die vom Druckmittel in der zweiten Steuerkammer (50) beaufschlagte, der ersten Wirkfläche (75) des Zusatzkolbens (36, 66) entgegengerichtete zweite Wirkfläche (56) des zweiten Steuerkolbens (62, 49). Das erste Steuerkolbenteil (62) des zweiten Steuerkolbens (62, 49) und die Wand (59) werden vom Zusatzkolben (36, 66) auf dem Anschlag (79) gehalten, so daß der zweite Steuerkolben (62, 49) in seiner definierten Lage verbleibt. Das heißt, daß der Zusatzkolben (36,66) in eine Position gebracht wird, in der er eine Betätigung des kombinierten Einlaß- und Auslaßventils (43, 44, 45) durch den zweiten Steuerkolben (49, 62, 59) verhindert.

Fällt durch einen Defekt der erste Bremskreis des Motorfahrzeugs aus, so sinkt der Druck in der ersten Steuerkammer (73) ab. Ebenso sinkt der Druck in der Druckmitteleinlaßkammer (61) und in der zweiten Steuerkammer (50) auf den durch das Mehrkreis-Schutzventil vorgegebenen Sicherheitsdruck ab. Der Druck in der dritten Steuerkammer (48) hält die Wand (59) mit dem ersten Steuerkolbenteil (62) in Kontakt, da dieser Druck jetzt höher ist als der Druck in der Druckmitteleinlaßkammer (61). Dadurch wird das Kräftegleichgewicht zwischen den auf den zweiten Steuerkolben (62, 49) einwirkenden Kräften aufrechterhalten. Durch diese Maßnahme tritt keine das zweite Steuerkolbenteil (49) des zweiten Steuerkolbens (62, 49) in Richtung auf die zweite Steuerkammer (50) zu belastende Kraft in der dritten Steuerkammer (48) mehr auf, so daß der Druck in der zweiten Steuerkammer (50) ausreicht, um den zweiten Steuerkolben in Schließrichtung des Auslaßventils (45, 43) und in Öffnungsrichtung des Einlaßventils (44, 45) des kombinierten Einlaß- und Auslaßventils (43, 44, 45) zu verschieben und so die Funktions des Anhänger-Steuerventils aufrechtzuerhalten.

Die durch die Kraft des Druckes in der zweiten Steuerkammer (50) auf das zweite Steuerkolbenteil (49) ausgeübte Kraft bewirkt, daß das zweite Steuerkolbenteil (49) und das erste Steuerkolbenteil (62) des zweiten Steuerkolbens (62, 49) nach oben in Richtung auf die Arbeitskammer (64, 40) zu verschoben werden. Dabei wird der Zusatzkolben (33, 66) vom zweiten Steuerkolben (62, 49) mitgenommen und in Richtung auf die erste Steuerkammer (73) zu verschoben. Der erste Steuerkolben (33, 70) wird dabei mittels einer am Zusatzkolben (36, 66) vorgesehenen Anschlagfläche (77) vom Zusatzkolben (36, 66) ebenfalls mitgenommen und in Richtung auf die erste Steuerkammer (73) zu verschoben.

Bei der weiteren Bewegung des zweiten Steuerkolbens (62, 49) nach oben in Richtung auf die Arbeitskammer (64, 40) zu setzt das Dichtelement (45) auf dem Ventilkörper (43) des am ersten Steuerkolben (33, 70) angeordneten Stößels auf. Das Auslaßventil (43, 45) gelangt in die Schließstellung und das Einlaßventil (44, 45) gelangt bei einer weiteren Aufwärtsbewegung des zweiten Steuerkolbens (62, 49) in die Offenstellung. Der vom Bremsdruck-Steuerventil auszusteuernde Druck wird jetzt in Abhängigkeit von den einander entgegengerichteten Wirkflächen am zweiten Steuerkolben (62, 49) geregelt.

Sowohl beim Bremsdruck-Steuerventil gemäß dem Ausführungsbeispiel nach Fig. 1 als auch gemäß dem Ausführungsbeispiel nach Fig. 2 können die Wirkflächen des ersten Steuerkolbens und des zweiten Steuerkolbens dem jeweiligen Einsatzzweck entsprechend vergrößert oder verkleinert werden.

Zwingend notwendig ist es jedoch für den Gegenstand der Erfindung, daß der zweite Steuerkolben direkt oder indirekt vom Druckmittel aus einem ersten Bremskreis entgegen der Kraft des Druckmittels aus einem zweiten Bremskreis belastet wird, wobei eine direkt am zweiten Steuerkolben vorgesehene Wirkfläche oder eine Wirkfläche an einem mit dem zweiten Steuerkolben in Wirkverbindung bringbaren Bauteil, die vom Druckmittel aus dem ersten Bremskreis beaufschlagt wird, größer bemessen sein muß als die dieser Wirkfläche entgegengerichtete vom Druckmittel aus dem zweiten Bremskreis beaufschlagte Wirkfläche des zweiten Steuerkolbens bzw. größer sein muß als die Differenzwirkfläche am zweiten Steuerkolben, die sich aus der Differenz zwischen der vom Arbeitsdruck beaufschlagten Wirkfläche am zweiten Steuerkolben und der vom Druckmittel in der zweiten Steuerkammer beaufschlagten, dieser besagten Wirkfläche entgegengerichteten Wirkfläche ergibt.

Des weiteren muß die Bedingung erfüllt sein, daß auch der zweite Steuerkolben eine Wirkfläche aufweist oder mit einem eine Wirkfläche aufweisenden Bauteil in Wirkverbindung bringbar ist, die vom Druckmittel in der Arbeitskammer beaufschlagbar ist, wobei diese Wirkfläche so angeordnet sein muß, daß die vom Druckmittel in der Arbeitskammer auf dem zweiten Steuerkolben über diese Wirkfläche ausgeübte Kraft der vom Druckmittel im zweiten Bremskreis auf den zweiten Steuerkolben ausgeübten Kraft entgegengerichtet ist. Der Zusatzkolben (36, 66) kann auch am zweiten Steuerkolben (49, 62) im Bereich des Steuerkolbenteiles (49) des zweiten Steuerkolbens (49, 62) angeordnet sein, und zwar auf der Seite des Steuerkolbenteiles (49), die der dritten Steuerkammer (48) zugewandt ist. In diesem Fall müßte die dritte Steuerkammer (48) mit dem ersten Steuerdruck aus der ersten Steuerkammer (73) beaufschlagt werden.

Es kann auf der der ersten Steuerkammer (73) abgewandten Seite des Zusatzkolbens (36, 66) im Gehäuse ein Anschlag vorgesehen sein, an welchen der Zusatzkolben (36, 66) zur Anlage bringbar ist, wobei der Anschlag so angeordnet ist, daß beim zur Anlagekommen des Zusatzkolbens (36, 66) am Anschlag ein geringer Abstand zwischen den einander zugewandten Seiten des Zusatzkolbens (36, 66) und des zweiten Steuerkolbens (49, 62) verbleibt.

Der mit dem Ventilstößel versehene erste Steuerkolben (33, 70) ist in seiner axialen Erstreckung so bemessen, daß der Ventilstößel eine Betätigung des kombinierten Einlaß- und Auslaßventils (43, 44, 45) mittels des zweiten Steuerkolbens (49, 62) zuläßt, wenn bei Ausfall des ersten Bremskreises der erste Steuerkolben (33, 70) und der Zusatzkolben (36, 66) an den Anschlägen (74, 76) im Deckel des Gehäuses (35) zur Anlage kommen.

Der beim Bremsdruck-Steuerventil gemäß Fig. 1 gezeigte Druckausgleichsraum (32) in der Führung für den ersten Steuerkolben (25) kann, wie bereits erwähnt, über den Kanal (8) im zweiten Steuerkolben (2, 9) und eine weitere Gehäusebohrung mit der Atmosphäre verbunden sein. Dasgleiche trifft auch für den Ringraum (28) zwischen der Ringfläche des zweiten Steuerkolbens (2, 9) und dem Gehäusevorsprung zu, an welchem der zweite Steuerkolben (2, 9) in Richtung auf die zweite Steuerkammer (3) zu zur Anlage bringbar ist.

Der Druckausgleichsraum (32) und auch der besagte Ringraum (28) können aber auch über das Auslaßventil (19, 21) ständig mit der Atmosphäre verbunden sein.

Werden die im Fortsatz (31) vorgesehene, mit dem Kanal (8) und dem Auslaßventil (19, 21) in Verbindung stehende Bohrung sowie der Kanal (8) selbst verschlossen und wird der Ringraum (28) mit einer im Gehäuse (1, 17) vorgesehenen Bohrung (83) verbunden, die als Druckmittelanschluß ausgebildet über eine Ventileinrichtung mit einer Druckmittelquelle verbindbar ist, so kann die der ersten Wirkfläche (11, 12) bzw. die der Teilfläche (11) der ersten Wirkfläche (11, 12) des zweiten Steuerkolbens (2, 9) entgegengerichtete Ringfläche am zweiten Steuerkolben (2, 9) als eine zusätzliche in Richtung auf die erste Steuerkammer (26) zu mit einem Druckmittel beaufschlagbare Steuerfläche, z.B. Notsteuerfläche, dienen.

**Patentansprüche**

1. Zweikreisig ansteuerbares Bremsdruck-Steuerventil für druckmittelbetätigte Fahrzeug-Bremsanlagen, insbesondere Anhänger-Steuerventil, mit folgenden Merkmalen:

    a) es ist ein erster Steuerkolben (25) vorgesehen, der eine erste Wirkfläche (27) und eine der ersten Wirkfläche (27) entgegengerichtete zweite Wirkfläche (23) aufweist, wobei die erste Wirkfläche (27) eine erste Steuerkammer (26) begrenzt;

    b) die erste Wirkfläche (27) ist von einem ersten Steuerdruck aus einem ersten Bremskreis beaufschlagbar;

    c) es ist ein relativ zum ersten Steuerkolben (25) bewegbarer zweiter Steuerkolben (2, 9) vorgesehen, der eine erste Wirkfläche (11, 12) und eine der ersten Wirkfläche (11, 12) entgegengerichtete zweite Wirkfläche (4) aufweist;

    d) der zweite Steuerkolben (2, 9) begrenzt mit seiner zweiten Wirkfläche (4) eine zweite Steuerkammer (3), wobei die zweite Wirkfläche (4) von einem zweiten Steuerdruck aus einem zweiten Bremskreis beaufschlagbar ist;

    e) es ist ein kombiniertes Einlaß- und Auslaßventil (19, 20, 21) vorgesehen, das zur wahlweisen Verbindung einer Arbeitskammer (14) mit einer Druckmitteleinlaßkammer einerseits oder mit einem Entlüftungsanschluß andererseits dient;

    f) das kombinierte Einlaß- und Auslaßventil (19, 20, 21) ist von beiden Steuerkolben (25 bzw. 2, 9) betätigbar;

    g) die zweite Wirkfläche (23) des ersten Steuerkolbens (25) ist von dem Druck in der Arbeitskammer (14) beaufschlagbar;

    gekennzeichnet durch die folgenden Merkmale:

    h) die erste Wirkfläche (11, 12) des zweiten Steuerkolbens (2, 9) ist mit dem ersten Steuerdruck der ersten Steuerkammer (26) beaufschlagt;

    i) der zweite Steuerkolben (2, 9) ist direkt vom Druck in der Arbeitskammer (14) entgegen dem zweiten Steuerdruck beaufschlagbar oder mit einem eine Wirkfläche aufweisenden Bauteil in Wirkverbindung bringbar, wobei die Wirkfläche dieses Bauteiles vom Druck in der Arbeitskammer (14) entgegen der Kraft des zweiten Steuerdruckes beaufschlagbar ist;

    k) die erste Wirkfläche (11, 12) des zweiten Steuerkolbens (2, 9) ist größer bemessen als die zweite Wirkfläche (4) des zweiten Steuerkolbens (2, 9).

2. Zweikreisig ansteuerbares Bremsdruck-Steuerventil für druckmittelbetätigte Fahrzeug-Bremsanlagen, insbesondere Anhänger-Steuerventil, mit folgenden Merkmalen:

    a) es ist ein erster Steuerkolben (33, 70) vorgesehen, der eine erste Wirkfläche (34) und eine der ersten Wirkfläche (34) entgegengerichtete zweite Wirkfläche (39, 78) aufweist, wobei die erste Wirkfläche (34) eine erste Steuerkammer (73) begrenzt;

    b) die erste Wirkfläche (34) ist von einem ersten Steuerdruck aus einem ersten Bremskreis beaufschlagbar;

    c) die zweite Wirkfläche (39, 78) des ersten Steuerkolbens (33, 70) ist von dem Druck in einer Arbeitskammer (64, 40) beaufschlagbar;

    d) es ist ein relativ zum ersten Steuerkolben (33, 70) bewegbarer zweiter Steuerkolben (49, 62) vorgesehen, der eine erste Wirkfläche (56) und eine der ersten Wirkfläche (56) entgegengerichtete zweite Wirkfläche aufweist;

    e) der zweite Steuerkolben (49, 62) begrenzt mit seiner ersten Wirkfläche (56) eine zweite Steuerkammer (50), die von einem zweiten Steuerdruck aus einem zweiten Bremskreis beaufschlagbar ist;

    f) die zweite Wirkfläche des zweiten Steuerkolbens (49, 62) begrenzt die Arbeitskammer (64, 40);

    g) es ist ein kombiniertes Einlaß- und Auslaßventil (43, 44, 45) vorgesehen, das zur wahlweisen Verbindung der Arbeitskammer (64, 40) mit einer Druckmitteleinlaßkammer (61) einerseits oder mit einem Entlüftungsanschluß andererseits dient;

h) das kombinierte Einlaß- und Auslaßventil (43, 44, 45) ist von beiden Steuerkolben (33, 70 bzw. 49, 62,) betätigbar;

gekennzeichnet durch die folgenden Merkmale:

i) es ist ein Zusatzkolben (36, 66) vorgesehen, dessen Wirkfläche (75) vom ersten Steuerdruck aus der ersten Steuerkammer (73) in Richtung auf den zweiten Steuerkolben (49, 62) zu beaufschlagbar und bewegbar ist;

k) der Zusatzkolben (36, 66) ist so angeordnet und seine Wirkfläche (75) ist so bemessen, daß er bei Vorhandensein von Steuerdruckmittel in der ersten Steuerkammer (73) und in der zweiten Steuerkammer (50) in eine Position bringbar ist, in der er eine Betätigung des kombinierten Einlaß- und Auslaßventils (43, 44, 45) durch den zweiten Steuerkolben (49, 62) verhindert, dadurch, daß der Zusatzkolben (36, 66) mit seiner der ersten Steuerkammer (73) abgewandten Seite an der der zweiten Steuerkammer (50) abgewandten Seite des zweiten Steuerkolbens (62, 49) oder einem mit diesem verbundenen Bauteil zur Anlage bringbar ist oder daß der Zusatzkolben (36, 66) mit seiner der ersten Steuerkammer (73) abgewandten Seite an einem Anschlag im Gehäuse zur Anlage bringbar ist, der so angeordnet ist, daß beim zur Anlagekommen des Zusatzkolbens (36, 66) am Anschlag ein geringer Abstand zwischen den einander zugewandten Seiten des Zusatzkolbens (36, 66) und des zweiten Steuerkolbens (62, 49) verbleibt.

3. Zweikreisig ansteuerbares Bremsdruck-Steuerventil für druckmittelbetätigte Fahrzeug-Bremsanlagen, insbesondere Anhänger-Steuerventil, mit folgenden Merkmalen:

a) es ist ein erster Steuerkolben (33, 70) vorgesehen, der eine erste Wirkfläche (34) und eine der ersten Wirkfläche (34) entgegengerichtete zweite Wirkfläche (39, 78) aufweist, wobei die erste Wirkfläche (34) eine erste Steuerkammer (73) begrenzt;

b) die erste Wirkfläche (34) ist von einem ersten Steuerdruck aus einem ersten Bremskreis beaufschlagbar;

c) die zweite Wirkfläche (39, 78) des ersten Steuerkolbens (33, 70) ist von dem Druck in einer Arbeitskammer (64, 40) beaufschlagbar;

d) es ist ein relativ zum ersten Steuerkolben (33, 70) bewegbarer zweiter Steuerkolben (49, 62) vorgesehen, der eine erste Wirkfläche (56) und eine der ersten Wirkfläche (56) entgegengerichtete zweite Wirkfläche aufweist;

e) der zweite Steuerkolben (49, 62) begrenzt mit seiner ersten Wirkfläche (56) eine zweite Steuerkammer (50), die von einem zweiten Steuerdruck aus einem zweiten Bremskreis beaufschlagbar ist;

f) die zweite Wirkfläche des zweiten Steuerkolbens (49, 62) begrenzt die Arbeitskammer (64, 40);

g) es ist ein kombiniertes Einlaß- und Auslaßventil (43, 44, 45) vorgesehen, das zur wahlweisen Verbindung der Arbeitskammer (64, 40) mit einer Druckmitteleinlaßkammer (61) einerseits oder mit einem Entlüftungsanschluß andererseits dient;

h) das kombinierte Einlaß- und Auslaßventil (43, 44, 45) ist von beiden Steuerkolben (33, 70 bzw. 49, 62) betätigbar;

gekennzeichnet durch die folgenden Merkmale:

i) es ist ein Zusatzkolben (36, 66) vorgesehen, dessen Wirkfläche (75) vom ersten Steuerdruck aus der ersten Steuerkammer (73) in Richtung auf den zweiten Steuerkolben (49, 62) zu beaufschlagbar und bewegbar ist;

k) der Zusatzkolben (36, 66) ist so angeordnet und seine Wirkfläche (75) ist so bemessen, daß er bei Vorhandensein von Steuerdruckmittel in der ersten Steuerkammer (73) und in der zweiten Steuerkammer (50) in eine Position bringbar ist, in der er eine Betätigung des kombinierten Einlaß- und Auslaßventils (43, 44, 45) durch den zweiten Steuerkolben (49, 62) verhindert;

l) der Zusatzkolben (36, 66) ist am zweiten Steuerkolben (49, 62) angeordnet.

4. Zweikreisig ansteuerbares Bremsdruck-Steuerventil nach wenigstens einem der vorhergehenden Ansprüche, dadurch gekennzeichnet, daß der Zusatzkolben (36, 66) als Ringkolben ausgebildet ist.

5. Zweikreisig ansteuerbares Bremsdruck-Steuerventil nach wenigstens einem der vorhergehenden Ansprüche, dadurch gekennzeichnet, daß der Zusatzkolben (36, 66) auf seiner der ersten Steuerkammer (73) zugewandten Seite eine vom Druckmittel in der ersten Steuerkammer (73) beaufschlagbare Wirkfläche (75) aufweist, die größer ist als die vom Druckmittel in der zweiten Steuerkammer (50) beaufschlagbare entgegengerichtete Wirkfläche (56) des zweiten Steuerkolbens (62, 49).

6. Zweikreisig ansteuerbares Bremsdruck-Steuerventil nach wenigstens einem der vorhergehenden Ansprüche, dadurch gekennzeichnet, daß der Zusatzkolben (36, 66) auf seiner der ersten Steuerkammer (73) zugewandten Seite eine vom Druckmittel in der ersten steuerkammer (73) beaufschlagbare Wirkflache (75) aufweist, die gleich oder größer ist als die entgegengerichtete Differenzwirkfläche, welches sich aus der Differenz zwischen der vom Druckmittel in der zweiten Steuerkammer (50) beaufschlagten Wirkfläche (56) des zweiten Steuerkolbens (62, 49) und der dieser Wirkfläche (56) entgegengerichteten, vom Druckmittel in der Arbeitskammer (64, 40) beaufschlagten Wirkfläche des zweiten Steuerkolbens (62, 49) ergibt.

7. Zweikreisig ansteuerbares Bremsdruck-Steuerventil nach wenigstens einem der vorhergehenden Ansprüche, gekennzeichnet durch die folgenden Merkmale:
   a) der Zusatzkolben (36, 66) ist topfförmig und abgestuft ausgebildet;
   b) der erste Steuerkolben (33, 70) ist abgestuft ausgebildet;
   c) der Zusatzkolben (36, 66) und der erste Steuerkolben (33, 70) sind teleskopartig ineinander und relativ zueinander verschiebbar angeordnet, wobei der erste Steuerkolben (33, 70) im Zusatzkolben (36, 66) geführt ist;
   d) der erste Steuerkolben (33,70) ist mit seinem den kleineren Durchmesser aufweisenden Teil (70) durch eine Ausnehmung (68) in der der Arbeitskammer (64, 40) zugewandten Seite des Zusatzkolbens (36, 66) aus diesem herausgeführt und erstreckt sich in die Arbeitskammer (64, 40).

8. Zweikreisig ansteuerbares Bremsdruck-Steuerventil nach wenigstens einem der vorhergehenden Ansprüche, gekennzeichnet durch die folgenden Merkmale:
   a) die Arbeitskammer (64, 40) ist in eine erste Teilkammer (64) und in eine zweite Teilkammer (40) unterteilt;
   b) die erste Teilkammer (64) wird einerseits von der Wirkfläche des zweiten Steuerkolbens (62, 49), die der vom Druckmittel in der zweiten Steuerkammer (50) beaufschlagten Wirkfläche (56) des zweiten Steuerkolbens (62, 49) entgegengerichtet ist und andererseits von einer Teilwirkfläche (78) am ersten Steuerkolben (33, 70), die der ersten Wirkfläche (34) des ersten Steuerkolbens (33, 70) entgegengerichtet ist sowie einer Teilfläche (65) des Zusatzkolbens (36, 66), welche der die erste Steuerkammer (73) begrenzenden Wirkfläche (73) des Zusatzkolbens (36, 66) entgegengerichtet ist, begrenzt;
   c) die zweite Teilkammer (40) wird einerseits von einer Teilwirkfläche (39) des ersten Steuerkolbens (33, 70), die der ersten Wirkfläche (34) des ersten Steuerkolbens (33, 70) entgegengerichtet ist und andererseits von einer dieser Teilwirkfläche (39) gegenüberliegenden Teilwirkfläche (67, 77) des Zusatzkolbens (36, 66) begrenzt;
   d) die beiden vom Druckmittel in der Arbeitskammer (64, 40) beaufschlagten, einander entgegengerichteten Teilflächen (65 und 67, 77) des Zusatzkolbens (36, 66) sind gleichgroß ausgebildet;
   e) die beiden Teilkammern (64 und 40) sind über einen im Zusatzkolben (36, 66) angeordneten Kanal (41) miteinander verbunden.

9. Zweikreisig ansteuerbares Bremsdruck-Steuerventil nach Anspruch 1, dadurch gekennzeichnet, daß die Beaufschlagung des zweiten Steuerkolbens (2, 9) mit dem Druck aus der Arbeitskammer (14) indirekt erfolgt, dadurch, daß der erste Steuerkolben (25) und der zweite Steuerkolben (2, 9) in Reihe hintereinanderliegend angeordnet sind und der erste Steuerkolben (25) vom Druck in der Arbeitskammer (14) am zweiten Steuerkolben (2, 9) zur Anlage bringbar ist.

10. Zweikreisig ansteuerbares Bremsdruck-Steuerventil nach wenigstens einem der vorhergehenden Anspruche, dadurch gekennzeichnet, daß die der ersten Wirkfläche (11, 12) bzw. die der Teilfläche (11) der ersten Wirkfläche (11, 12) des zweiten Steuerkolbens (2, 9) entgegengerichtete Ringfläche am zweiten Steuerkolben (2, 9) einen Ringraum (28) begrenzt, der mit einer als Druckmittelanschluß (83) dienenden Bohrung in Verbindung steht.

11. Zweikreisig ansteuerbares Bremsdruck-Steuerventil nach Anspruch 12, dadurch gekennzeichnet, daß der Ringraum (28) mit einer Druckmittelquelle verbindbar ist.

**Claims**

1. Dual-circuit controlled brake pressure control valve for pressure medium-operated vehicle brake systems, especially a trailer control valve, having the following features:
   a) a first control piston (25) is provided, which has a first effective face (27) and a second effective face (23) opposing the first effective face (27) the first effective face (27) bounding a first control chamber (26);

b) the first effective face (27) is arranged to be pressurized by a first control pressure from a first brake circuit;

c) a second control piston (2, 9) movable relative to the first control piston (25) is provided, which second control piston has a first effective face (11, 12) and a second effective face (4) opposing the first effective face (11, 12);

d) the second control piston (2, 9) bounds with its second effective face (4) a second control chamber (3), the second effective face (4) being arranged to be pressurized by a second control pressure from a second brake circuit;

e) a combined inlet and outlet valve (19, 20, 21) is provided, which serves for selectively connecting a work chamber (14) to a pressure medium inlet chamber on one side or to a venting port on the other side;

f) the combined inlet and outlet valve (19, 20, 21) is arranged to be operated by both control pistons (25 and 2, 9);

g) the second effective face (23) of the first control piston (25) is arranged to be pressurized by the pressure in the work chamber (14);

characterized by the following features:

h) the first effective face (11, 12) of the second control piston (2, 9) is pressurized with the first control pressure of the first control chamber (26);

i) the second control piston (2, 9) is arranged to be pressurized directly by the pressure in the work chamber (14) against the second control pressure or to be brought into operative connection with a component having an effective face, the effective face of that component being arranged to be pressurized by the pressure in the work chamber (14) against the force of the second control pressure;

k) the first effective face (11, 12) of the second control piston (2, 9) is larger than the second effective face (4) of the second control piston (2, 9).

2. A dual-circuit-controlled brake pressure control valve for pressure medium-operated vehicle brake systems, especially a trailer control valve, having the following features:

a) a first control piston (33, 70) is provided, which has a first effective face (34) and a second effective face (39, 78) opposing the first effective face (34), the first effective face (34) bounding a first control chamber (73);

b) the first effective face (34) is arranged to be pressurized by a first control pressure from a first brake circuit;

c) the second effective face (39, 78) of the first control piston (33, 70) is arranged to be pressurized by the pressure in a work chamber (64, 40);

d) a second control piston (49, 62) movable relative to the first control piston (33, 70) is provided, which has a first effective face (56) and a second effective face opposing the first effective face (56);

e) the second control piston (49, 62) bounds with its first effective face (56) a second control chamber (50), which is arranged to be pressurized by a second control pressure from a second brake circuit;

f) the second effective face of the second control piston (49, 62) bounds the work chamber (64, 40);

g) a combined inlet and outlet valve (43, 44, 45) is provided, which serves for selectively connecting the work chamber (64, 40) to a pressure medium inlet chamber (61) on one side or to a venting port on the other side;

h) the combined inlet and outlet valve (43, 44, 45) is operable by both control pistons (33, 70 and 49, 62,);

characterized by the following features:

i) an auxiliary piston (36, 66) is provided, the effective face (75) of which is arranged to be pressurized and moved by the first control pressure from the first control chamber (73) towards the second control piston (49, 62,),

k) the auxiliary piston (36, 66) is arranged, and its effective face (75) is dimensioned, so that in the presence of control pressure medium in the first control chamber (73) and in the second control chamber (50) it can be brought into a position in which it prevents operation of the combined inlet and outlet valve (43, 44, 45) by the second control piston (49, 62) in that the auxiliary piston (36, 66) with its side remote from the first control chamber (73) can be caused to engage the side of the second control piston (62, 49) remote from the second control chamber (50) or a component connected thereto, or in that the auxiliary piston (36, 66) is caused to engage a stop member in the housing with its side remote from the first control chamber (73), the stop member being arranged so that as the auxiliary piston (36, 66) is brought into engagement with the stop member a slight space remains between the facing sides of the auxiliary piston (36, 66) and the second control piston (62, 49).

3. A dual-circuit-controlled brake pressure control valve for pressure medium-operated vehicle brake systems, especially a trailer control valve, having the following features:

a) a first control piston (33, 70) is provided, which has a first effective face (34) and a second effective face (39, 78) opposing the first effective face (34), the first effective face (34) bounding a first control chamber (73);

b) the first effective face (34) is arranged to be pressurized by a first control pressure from a first brake circuit;

c) the second effective face (39, 78) of the first control piston (33, 70) is arranged to be pressurized by the pressure in a work chamber (64, 40);

d) a second control piston (49, 62) movable relative to the first control piston (33, 70) is provided, which has a first effective face (56) and a second effective face opposing the first effective face (56);

e) the second control piston (49, 62) bounds with its first effective face (56) a second control chamber (50), which is arranged to be pressurized by a second control pressure from a second brake circuit;

f) the second effective face of the second control piston (49, 62) bounds the work chamber (64, 40);

g) a combined inlet and outlet valve (43, 44, 45) is provided, which serves for selectively connecting the work chamber (64, 40) to a pressure medium inlet chamber (61) on one side or to a venting port on the other side;

h) the combined inlet and outlet valve (43, 44, 45) is operable by both control pistons (33, 70 and 49, 62);

characterized by the following features:

i) an auxiliary piston (36, 66) is provided, the effective face (75) of which is arranged to be pressurized and moved by the first control pressure from the first control chamber (73) towards the second control piston (49, 62);

k) the auxiliary piston (36, 66) is arranged, and its effective face (75) is dimensioned, so that in the presence of control pressure medium in the first control chamber (73) and in the second control chamber (50) it can be brought into a position in which it prevents operation of the combined inlet and outlet valve (43, 44, 45) by the second control piston (49, 62);

l) the auxiliary piston (36, 66) is arranged on the second control piston (49, 62).

4. A dual-circuit-controlled brake pressure control valve according to at least one of the preceding claims, characterized in that the auxiliary piston (36, 66) is in the form of an annular piston.

5. A dual-circuit-controlled brake pressure control valve according to at least one of the preceding claims, characterized in that on its side facing the first control chamber (73) the auxiliary piston (36, 66) has an effective face (75) that is arranged to be pressurized by pressure medium in the first control chamber (73), the effective face being larger than the opposing effective face (56) of the second control piston (62, 49) that is arranged to be pressurized by pressure medium in the second control chamber (50).

6. A dual-circuit-controlled brake pressure control valve according to at least one of the preceding claims, characterized in that on its side facing the first control chamber (73) the auxiliary piston (36, 66) has an effective face (75) that is arranged to be pressurized by pressure medium in the first control chamber (73), the effective face being the same as or larger than the opposing differential effective face which is obtained from the difference between the effective face (56) of the second control piston (62, 49) pressurized by pressure medium in the second control chamber (50) and the effective face of the second control piston (62, 49) opposing the effective face (56) and pressurized by pressure medium in the work chamber (64, 40).

7. A dual-circuit-controlled brake pressure control valve according to at least one of the preceding claims, characterized by the following features:

a) the auxiliary piston (36, 66) is cup-shaped and of stepped construction;

b) the first control piston (33, 70) is of stepped construction;

c) the auxiliary piston (36, 66) and the first control piston (33, 70) are arranged to be telescoped one inside the other and to be displaced relative to one another, the first control piston (33, 70) being guided in the auxiliary piston (36, 66).

d) the first control piston (33, 70) is guided with its part (70) of smaller diameter through an opening (68) in the side of the auxiliary piston (36, 66) facing the work chamber (64, 40) and out of the auxiliary piston and extends into the work chamber (64, 40).

8. A dual-circuit-controlled brake pressure control valve according to at least one of the preceding claims, characterized by the following features:

a) the work chamber (64, 40) is divided into a first compartment (64) and a second compartment (40);

b) the first compartment (64) is bounded on one side by the effective face of the second control piston (62, 49) which is opposed to the effective face (56) of the second control piston (62, 49) pressurized by pressure medium in the second control chamber (50), and on the other side by a partial effective face (78) of the first control piston (33, 70) which is opposed to the first effective face (34) of the first control piston (33, 70) and by a partial face (65) of the auxiliary piston (36, 66) which opposes the effective face (75) of the auxiliary piston (36, 66) bounding the first control chamber (73);

c) the second compartment (40) is bounded on one side by a partial effective face (39) of the first control piston (33, 70) which is opposed to the first effective face (34) of the first control piston (33, 70) and on the other side by a partial effective face (67, 77) of the auxiliary piston (36, 66) lying opposite that partial effective face (39);

d) the two opposing partial faces (65 and 67, 77) of the auxiliary piston (36, 66) pressurized by pressure medium in the work chamber (64, 40) are of the same size;

e) the two compartments (64 and 40) are connected to one another by way of a duct (41) arranged in the auxiliary piston (41).

9. A dual-circuit-controlled brake pressure control valve according to claim 1, characterized in that pressurizing the second control piston (2, 9) with the pressure from the work chamber (14) is effected indirectly, in that the first control piston (25) and the second control piston (2, 9) are arranged to lie one behind the other in series, and the first control piston (25) is arranged to be brought by the pressure in the work chamber (14) into engagement with the second control piston (2, 9).

10. A dual-circuit-controlled brake pressure control valve according to at least one of the preceding claims, characterized in that the annular face on the second control piston (2, 9) opposing the first effective face (11, 12) or the partial face (11) of the first effective face (11, 12) of the second control piston (2, 9) bounds an annular space (28) which is connected to a bore serving as pressure medium port (83).

11. A dual-circuit-controlled brake pressure control valve according to claim 12, characterized in that the annular space (28) is arranged to be connected to a source of pressure medium.

## Revendications

1. Soupape de commande de la pression de freinage pouvant être commandée par deux circuits, et destinée à des installations de freinage de véhicules actionnées par un agent de pression, notamment une soupape de commande de remorque, présentant les caractéristiques suivantes:

a) il est prévu un premier piston de commande (25) qui comporte une première surface active (27) et une seconde surface active (23) dirigée en sens inverse de la première surface active (27), cette première surface active (27) délimitant une première chambre de commande (26);

b) la première surface active (27) peut être sollicitée par une première pression de commande en provenance d'un premier circuit de freinage;

c) il est prévu un second piston de commande (2, 9) qui est mobile par rapport au premier piston de commande (25), et qui comporte une première surface active (11, 12), ainsi qu'une seconde surface active (4) dirigée en sens inverse de la première surface active (11, 12);

d) le second piston de commande (2, 9) délimite par sa seconde surface active (4), une seconde chambre de commande (3), la seconde surface active (4) pouvant être sollicitée par une seconde pression de commande en provenance d'un second circuit de freinage;

e) il est prévu une soupape combinée d'admission et d'échappement (19, 20, 21), qui est destinée à établir au choix la liaison entre une chambre de travail (14) et d'une part une chambre d'admission d'agent de pression, ou d'autre part un raccord de purge;

f) la soupape combinée d'admission et d'échappement (19, 20, 21) peut être actionnée par les deux pistons de commande (25 et 2, 9);

g) la seconde surface active (23) du premier piston de commande (25) peut être sollicitée par la pression dans la chambre de travail (14);

caractérisée car les particularités suivantes:

h) la première surface active (11, 12) du second piston de commande (2, 9) est sollicitée par la première pression de commande de la première chambre de commande (26);

i) le second piston de commande (2; 9) peut être sollicité directement par la pression dans la chambre de travail (14) à l'encontre de la seconde pression de commande, ou peut être amené en liaison active avec une pièce comportant une surface active, la surface active de cette pièce pouvant être sollicitée par la pression dans la chambre de travail (14) à l'encontre de la force de la seconde pression de commande;

k) la première surface active (11, 12) du second piston de commande (2, 9) est de dimension plus importante que la seconde surface active (4) du second piston de commande (2, 9).

2. Soupape de commande de la pression de freinage pouvant être commandée par deux circuits, et destinée à des installations de freinage de véhicules actionnées par un agent de pression, notamment une soupape de commande de remorque, présentant les caractéristiques suivantes:

a) il est prévu un premier piston de commande (33, 70) qui comporte une première surface active (34) et une seconde surface active (39, 78) dirigée en sens inverse de la première surface active (34), cette première surface active (34) délimitant une première chambre de commande (73);

b) la première surface active (34) peut être sollicitée par une première pression de commande en provenance d'un premier circuit de freinage;

c) la seconde surface active (39, 78) du premier piston de commande (33, 70) peut être sollicitée par la pression dans une chambre de travail (64, 40);

d) il est prévu un second piston de commande (49, 62) qui est mobile par rapport au premier piston de commande (33, 70), et qui comporte une première surface active (56), ainsi qu'une seconde surface active dirigée en sens inverse de la première surface active (56);

e) le second piston de commande (49, 62) délimite, par sa première surface active (56), une seconde chambre de commande (50) qui peut être sollicitée par une seconde pression de commande en provenance d'un second circuit de freinage;

f) la seconde surface active du second piston de commande (49, 62) délimite la chambre de travail (64, 40);

g) il est prévu une soupape combinée d'admission et d'échappement (43, 44, 45), qui est destinée à établir au choix la liaison entre la chambre de travail (64, 40) et d'une part une chambre d'admission d'agent de pression (61), ou d'autre part un raccord de purge;

h) la soupape combinée d'admission et d'échappement (43, 44, 45) peut être actionnée par les deux pistons de commande (33, 70 et 49, 62,);

caractérisée par les particularités suivantes:

i) il est prévu un piston auxiliaire (36, 66) dont la surface active (75) peut être sollicitée et déplacée par la première pression de commande de la première chambre de commande (73), en direction du second piston de commande (49, 62);

k) le piston auxiliaire (36, 66) est disposé de telle sorte, et sa surface active (75) est dimensionnée de telle sorte, qu'en présence d'agent de pression de commande dans la première chambre de commande (73) et dans la seconde chambre de commande (50), il peut être amené dans une position dans laquelle il empêche un actionnement par le second piston de commande (49, 62), de la soupape combinée d'admission et d'échappement (43, 44, 45), grâce au fait que le piston auxiliaire (36, 66) peut être amené, avec son côté opposé à celui tourné vers la première chambre de commande (73), en appui contre le côté du second piston de commande (62, 49), opposé à celui tourné vers la seconde chambre de commande (50) ou bien contre une pièce reliée au second piston de commande, ou grâce au fait que le piston auxiliaire (36, 66) peut être amené en appui, avec son côté opposé à celui tourné vers la première chambre de commande (73), contre une butée dans le carter, qui est disposée de manière à ce que lors de l'arrivée en contact du piston auxiliaire (36, 66) avec la butée, il reste un faible espace entre les côtés se faisant face du piston auxiliaire (36, 66) et du second piston de commande (62, 49).

3. Soupape de commande de la pression de freinage pouvant être commandée par deux circuits, et destinée à des installations de freinage de véhicules actionnées par un agent de pression, notamment une soupape de commande de remorque, présentant les caractéristiques suivantes:

a) il est prévu un premier piston de commande (33, 70) qui comporte une première surface active (34) et une seconde surface active (39, 78) dirigée en sens inverse de la première surface active (34), cette première surface active (34) délimitant une première chambre de commande (73);

b) la première surface active (34) peut être sollicitée par une première pression de commande en provenance d'un premier circuit de freinage;

c) la seconde surface active (39, 78) du premier piston de commande (33, 70) peut être sollicitée par la pression dans une chambre de travail (64, 40);

d) il est prévu un second piston de commande (49, 62) qui est mobile par rapport au premier piston de commande (33, 70), et qui comporte une première surface active (56), ainsi qu'une seconde surface active dirigée en sens inverse de la première surface active (56);

e) le second piston de commande (49, 62) délimite, par sa première surface active (56), une seconde chambre de commande (50) qui peut être sollicitée par une seconde pression de commande en provenance d'un second circuit de freinage;

f) la seconde surface active du second piston de commande (49, 62) délimite la chambre de travail (64, 40);

g) il est prévu une soupape combinée d'admission et d'échappement (43, 44, 45), qui est destinée à établir au choix, la liaison entre la chambre de travail (64, 40) et d'une part une chambre d'admission d'agent de pression (61), ou d'autre part un raccord de purge;

h) la soupape combinée d'admission et d'échappement (43, 44, 45) peut être actionnée par les deux pistons de commande (33, 70 et 49, 62);

caractérisée par les particularités suivantes:

i) il est prévu un piston auxiliaire (36, 66) dont la surface active (75) peut être sollicitée et déplacée par la première pression de commande de la première chambre de commande (73), en direction du second piston de commande (49, 62);

k) le piston auxiliaire (36, 66) est disposé de telle sorte, et sa surface active (75) est dimensionnée de telle sorte, qu'en présence d'agent de pression de commande dans la première chambre de commande (73) et dans la seconde chambre de commande (50), il peut être amené dans une position dans laquelle il empêche un actionnement par le second piston de commande (49, 62), de la soupape combinée d'admission et d'échappement (43, 44, 45);

l) le piston auxiliaire (36, 66) est disposé sur le second piston de commande (49, 62).

4. Soupape de commande de la pression de freinage pouvant être commandée par deux circuits, selon l'une au moins des revendications précédentes, caractérisée en ce que le piston auxiliaire (36, 66) est réalisé sous la forme d'un piston annulaire.

5. Soupape de commande de la pression de freinage pouvant être commandée par deux circuits, selon l'une au moins des revendications précédentes, caractérisée en ce que le piston auxiliaire (36, 66) comporte sur son côté tourné vers la première chambre de commande (73), une surface active (75) qui peut être sollicitée par l'agent de pression dans la première chambre de commande (73), et qui est plus grande que la surface active (56) du second piston de commande (62, 49) dirigée en sens inverse et pouvant être sollicitée par l'agent de pression dans la seconde chambre de commande (50).

6. Soupape de commande de la pression de freinage pouvant être commandée par deux circuits, selon l'une au moins des revendications précédentes, caractérisée en ce que le piston auxiliaire (36, 66) comporte sur son côté tourné vers la première chambre de commande (73), une surface active (75) qui peut être sollicitée par l'agent de pression dans la première chambre de commande (73), et qui est égale ou plus grande que la différence de surfaces actives dirigée en sens inverse et obtenue par la différence entre la surface active (56) du second piston de commande (62, 49), sollicitée par l'agent de pression dans la seconde chambre de commande (50), et la surface active du second piston de commande (62, 49) dirigée en sens inverse de ladite surface active (56) et sollicitée par l'agent de pression dans la chambre de travail (64, 40).

7. Soupape de commande de la pression de freinage pouvant être commandée par deux circuits, selon l'une au moins des revendications précédentes, caractérisée par les particularités suivantes:

a) le piston auxiliaire (36, 66) présente une forme de pot et est étagé;

b) le premier piston de commande (33, 70) est étagé;

c) le piston auxiliaire (36, 66) et le premier piston de commande (33, 70) sont logés de manière télescopique l'un dans l'autre en pouvant coulisser l'un par rapport à l'autre, le premier piston de commande (33, 70) étant guidé dans le piston auxiliaire (36, 66);

d) le premier piston de commande (33, 70), avec sa partie (70) présentant le diamètre le plus faible, sort du piston auxiliaire (36, 66) au travers d'un évidement (68) dans le côté du piston auxiliaire (36, 66) dirigé vers la chambre de travail (64, 40), et s'étend dans la chambre de travail (64, 40).

8. Soupape de commande de la pression de freinage pouvant être commandée par deux circuits, selon l'une au moins des revendications précédentes, caractérisée par les particularités suivantes:

a) la chambre de travail (64, 40) est subdivisée en une première chambre partielle (64) et en une seconde chambre partielle (40);

b) la première chambre partielle (64) est délimitée, d'une part par la surface active du second piston de commande (62, 49), qui est dirigée en sens inverse de la surface active (56) du second piston de commande (62, 49) sollicitée par l'agent de pression dans la seconde chambre de commande (50), et d'autre part par une surface active partielle (78) sur le premier piston de commande (33, 70), qui est dirigée en sens inverse de la première surface active (34) du premier piston de commande (33, 70), ainsi que par une surface partielle (65) du piston auxiliaire (36, 66), qui est dirigée en sens inverse de la surface active (75) du piston auxiliaire (36, 66), délimitant la première chambre de commande (73);

c) la seconde chambre partielle (40) est délimitée, d'une part par une surface active partielle (39) du premier piston de commande (33, 70) qui est dirigée en sens inverse de la première surface active (34) du premier piston de commande (33, 70), et d'autre part par une surface active partielle (67, 77) du piston auxiliaire (36, 66), qui fait face à ladite surface active partielle (39);

d) les deux surfaces partielles (65 et 67, 77) du piston auxiliaire (36, 66), qui sont dirigées en sens inverse l'une de l'autre et qui sont sollicitées par l'agent de pression dans la chambre de travail (64, 40), sont de même grandeur;

e) les deux chambres partielles (64 et 40) sont reliées entre-elles par l'intermédiaire d'un canal (41) réalisé dans le piston auxiliaire (36, 66).

9. Soupape de commande de la pression de freinage pouvant être commandée par deux circuits, selon la revendication 1, caractérisée en ce que la sollicitation du second piston de commande (2, 9) par la pression en provenance de la chambre de travail (14), s'effectue de manière indirecte, à savoir que le premier piston de commande (25) et le second piston de commande (2, 9) sont montés en série l'un à la suite de l'autre, et le premier piston de commande (25) peut être amené en appui contre le second piston de commande (2, 9), par la pression dans la chambre de travail (14).

10. Soupape de commande de la pression de freinage pouvant être commandée par deux circuits, selon l'une au moins des revendications précédentes, caractérisée en ce que la surface annulaire sur le second piston de commande (2, 9), dirigée en sens inverse de la première surface active (11, 12) ou de la surface partielle (11) de la première surface active (11, 12) du second piston de commande (2, 9), délimite une chambre annulaire (28) qui est en communication avec un perçage faisant office de raccord d'agent de pression (83).

11. Soupape de commande de la pression de freinage pouvant être commandée par deux circuits, selon la revendication 12, caractérisée en ce que la chambre annulaire (28) peut être reliée à une source d'agent de pression.

FIG . 1

FIG. 2